# EUROPEAN PATENT SPECIFICATION

(11) **EP 2 994 710 B1**
(45) Date of publication and mention of the grant of the patent: **10.07.2019**
(21) Application number: 14736962.3
(22) Date of filing: 09.05.2014
(51) Int. Cl.: F28D 7/02, F24H 8/00, F28D 15/02, F28F 13/00

(54) **BOILER AND METHOD FOR OPTIMIZATION OF HEAT TRANSFER IN A BOILER**
KESSEL UND VERFAHREN ZUR OPTIMIERUNG DES WÄRMEÜBERGANGS IN EINEM KESSEL
CHAUDIÈRE ET PROCÉDÉ POUR L'OPTIMISATION DE TRANSFERT DE CHALEUR DANS UNE CHAUDIÈRE

(30) Priority: 10.05.2013 IT TO20130373
(43) Date of publication of application: 16.03.2016
(73) Proprietor: Argotec S.r.l., 10138 Torino (TO) (IT)
(72) Inventor: AVINO, David, I-10138 Torino (to) (IT); DI TANA, Valerio, I-00041 Albano Laziale (RM) (IT); BOESSO, Alessandro, I-35129 Padova (PD) (IT)
(74) Representative: Metroconsult Srl
(86) International application number: PCT/IB2014/061326
(87) International publication number: WO 2014/181304

(56) References cited:
- EP-A1- 0 313 812
- EP-A1- 1 734 315
- EP-A2- 1 039 246
- FR-A1- 2 611 030
- GB-A- 2 471 666
- US-A- 3 854 454
- US-A- 4 275 705
- DATABASE EPODOC [Online] EUROPEAN PATENT OFFICE, THE HAGUE, NL; Database accession no. KR-20100023863-A -& KR 101 013 150 B1 (NANOEM LNC [KR]) 10 February 2011 (2011-02-10)

## Description

The present invention relates to a boiler comprising a device and a heat exchanger and a method for optimizing heat transfer in a boiler; more particularly, it concerns the optimization of the thermal efficiency of a condensation boiler.

It is known that most condensation boilers available on the market are characterized by a combustion chamber that houses a burner and a heat exchanger, in which a fluid intended for use by the final user, e.g. water, circulates. In contact with the walls of the heat exchanger, the hot gases, or fumes, produced by the combustion process yield a part of their heat to the fluid contained in the exchanger. This thermal exchange causes the temperature of the combustion fumes to decrease, while the temperature of the fluid in the heat exchanger increases.

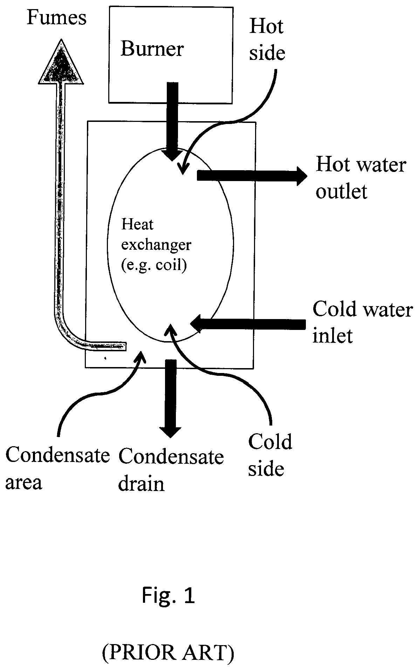

It is also known that different types of heat exchanger exist, e.g. plate, finned pack, or coil types. In this latter case applied to a condensation boiler, the coil contains the fluid, particularly water, which is heated along its path via thermal exchange with the fumes produced by a burner arranged on one side of the coil itself. In general, said side is referred to as hot side of the heat exchanger; the opposite side is referred to as cold side. With reference to Fig. 1, there is shown a simplified diagram of a condensation boiler according to the prior art, clearly indicating the hot and cold sides of the heat exchanger, the position of the burner and the condensate area.

A generic condensation boiler, e.g. operating on LPG or methane, exploits condensation of water vapor contained in the combustion fumes to attain high efficiency and low fuel consumption. The heat produced by combustion is transferred to the fluid flowing in the coil, which can then be used for sanitary or environmental heating purposes.

However, the increasing demand for energy-saving devices and the research currently being conducted in this field are leading towards increased heat exchange optimization.

Document KR 101013150 describes a waste heat collecting apparatus and a method thereof to extend a ventilation gas flow path in a zig-zag shape and to improve thermal transfer efficiency by the installation of a partition wall on an exhaust gas path. A waste heat collecting apparatus comprises a tank, multiple heat exchange heat pipes, a partition wall, an exterior wall, and a cover. The tank has a gas path. One end of the heat exchange heat pipe is located inside the tank and the other end is located in the gas path. The exterior wall maintains regular intervals to the tank and surrounds the tank. One end of the exterior wall is sealed and the other end thereof has a gas exhaust port. The upper side of the cover for the gas extension maintains regular intervals to the upper part of the tank.

Document GB 2471666 describes a steam generator having two sections separated by a wall through which finned heat pipes in circular rows pass, the heat pipes having one end in an exhaust flow in a vertical cylindrical space of a first section and the other end in water/steam of a second section, each heat pipe independently drawing in heat from the exhaust and transferring it to the water/steam. Exhaust inlet of the first section and outlet of the second section are on the same vertical axis, with exhaust gas flowing radially through the heat pipes being controlled by a baffle and butterfly valve. Each heat pipe is fixed to the wall with a welded collar, threaded nut and gasket or O-ring, and guided in holes in a bottom plate. Water is fed to the steam space by nozzles in a ring shaped tube. Panels of the exhaust flow section may be removable.

Document FR 2611030 describes an air heater for the production of hot air comprising a modulating burner associated with means for controlling its operation and a heat exchanger comprising: a main exchanger forcing the combustion gas to be conveyed in a direction counter to that of a stream of air to be heated; an auxiliary condensation exchanger arranged between the outlet of the main exchanger and the stream of air to be heated.

It is therefore one object of the present invention to provide a boiler comprising a device and a heat exchanger and a method for optimizing heat transfer in a boiler, which allows for more efficient heat transfer between combustion fumes and the fluid flowing in the heat exchanger. It is a second object of the present invention to provide a boiler and a method for optimizing heat transfer in a boiler, which substantially requires no modifications to the existing elements of a boiler already available on the market. It is a third object of the present invention to provide a boiler and a method for optimizing heat transfer in a boiler, which allows to increase the overall efficiency of a condensation boiler.

These and other objects of the invention are achieved through a boiler according to claim 1 and a method for optimizing heat transfer in a boiler according to claim 13, which are intended to be an integral part of the present description. In brief, a boiler and a method for optimizing heat transfer in a boiler are described, wherein said device is based on the operation of "heat pipes", also known as thermal conduits, in order to increase the heat exchange between combustion fumes and the heat exchanger installed inside of condensation boilers. Said device is adapted to cooperate with a heat exchanger, and allows to save fuel in the burner and to improve the fluid-dynamics of the fumes, resulting in condensation being moved to the terminal part of the heat exchanger that is most suitable for that purpose, i.e. the cold side thereof.

Further features of the invention are set out in the appended claims, which are intended to be an integral part of the present description.

The above objects will become more apparent from the following detailed description of a boiler and a method for optimizing heat transfer in a boiler according to the present invention, with particular reference to the annexed drawings, wherein:
- Figure 1 shows a simplified diagram of a condensation boiler according to the prior art;
- Figure 2 shows an example of a device of a boiler according to the present invention;
- Figure 3 shows an example of a device of a boiler according to the present invention, applied to a generic heat exchanger;
- Figure 4 shows a sectional plane with reference to Figure 3;
- Figure 5 shows in detail an example of a device of a boiler according to the present invention;
- Figure 6 shows a further example of a device of a boiler according to the present invention.

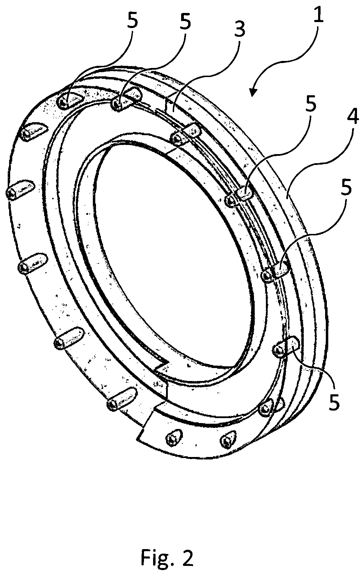

With reference to Fig. 2, a device 1 of a boiler according to the present invention, which is adapted to cooperate with a heat exchanger, comprises heat transfer means 3,4,5 adapted to transfer heat from fumes produced by a combustion to a cold side of said heat exchanger. More in detail, said heat transfer means 3,4,5 comprise a first plate 3, also referred to as "header plate", and a plurality of "heat pipes" 5, also referred to as thermal conduits. The device 1 also comprises a support plate 4 thermally and mechanically connected to the first plate 3 and to the heat pipes 5.

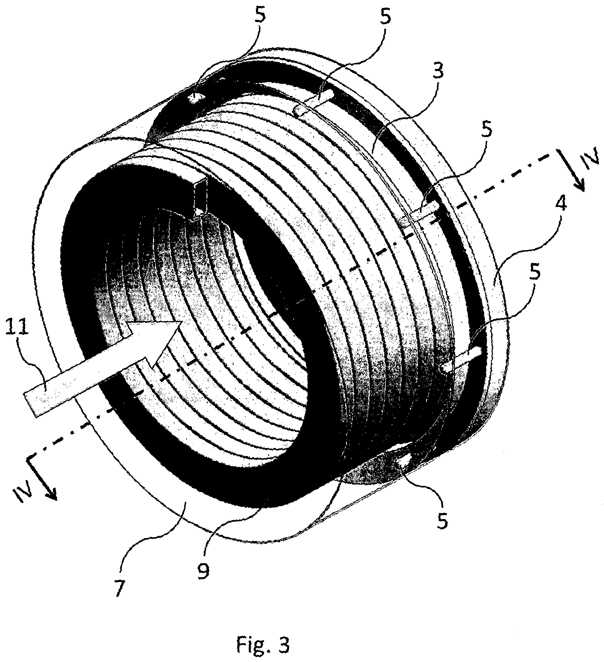

Said heat pipes 5 are preferably arranged equally spaced along the perimeter of the first plate 3. The latter preferably has a circular shape, if the cold side base of the heat exchanger is circular, but it may have other shapes as well, as will be explained below. Fig. 3 shows an application example wherein the device 1 is thermally connected to a heat exchanger 9, in particular a coil 9 belonging to a condensation boiler. It is worth specifying that the heat exchanger 9 may be different from a coil 9; for example, it may be a plate, or a finned pack, or it may have other shapes and dimensions. The following will describe an example of application using a coil 9.

The thermal connection to the coil 9 is effected through the support plate 4, which is also thermally and mechanically connected to the coil 9. Said support plate 4 can support the device 1 and possibly also the heat exchanger 9. Both the device 1 and the heat exchanger 9 are contained within an outer casing 7 that prevents the fumes from leaking out.

A first arrow 11 indicates the direction of engagement of the burner of the condensation boiler. The fumes produced by the burner are distributed radially, thus hitting the coil 9. The side of the coil 9 which is directly hit by said fumes is called hot side, whereas the opposite side of the coil 9 is called cold side.

The device 1 is adapted to be arranged in the proximity of the cold side of the coil 9; more in detail, the first plate 3 is adapted to direct the fumes towards the coldest part of the coil 9, subtracting heat therefrom. The first plate 3 is placed in thermal connection with the support plate 4 mainly through the heat pipes 5 and, to a certain extent, also directly. In its turn, the support plate 4 is mechanically and thermally connected to the coil 9. Said support plate 4 is adapted to cover a portion of the surface of the coil 9, more precisely the cold side portion. Being thermally connected to the heat pipes 5, the support plate 4 is adapted to house the heat pipes 5 in respective seats.

Moreover, aiming at improving the heat exchange with the coil 9, the support plate 4 is made of metal material having high thermal conductivity, e.g. aluminum, steel or other alloys. Also the first plate 3 is made of metal material having high thermal conductivity, for the purpose of improving the heat exchange with the fumes.

If the coil 9 has a cylindrical shape, as shown in Fig. 3, then the first plate 3 will have a cylindrical shape as well, i.e. the latter will be coherent with the shape of the heat exchanger 9. If the heat exchanger 9 has a rectangular base, then the first plate 3 will also have a rectangular shape.

The first plate 3 is adapted to house the heat pipes 5 in respective seats, e.g. hermetically sealed ones. In a preferred embodiment of the device 1, the heat pipes 5 are preferably equally spaced along the perimeter, or circumference, of the first plate 3. Each heat pipe 5 is a heat-exchanging device capable of carrying large amounts of heat with a very small difference in temperature between its hot and cold ends. It contains a small quantity of working fluid, e.g. water or solutions thereof containing ethylene glycol or the like; the rest of the heat pipe 5 is filled by vapor of that liquid, so that no other gases are present. The heat pipe 5 comprises an evaporator section, corresponding to its hot side, where the internal liquid evaporates when subjected to heat. On the other hand, the cold side of the heat pipe 5 corresponds to a condenser section, where internal vapor condenses. Therefore, heat transfer occurs from the evaporator section to the condenser section.

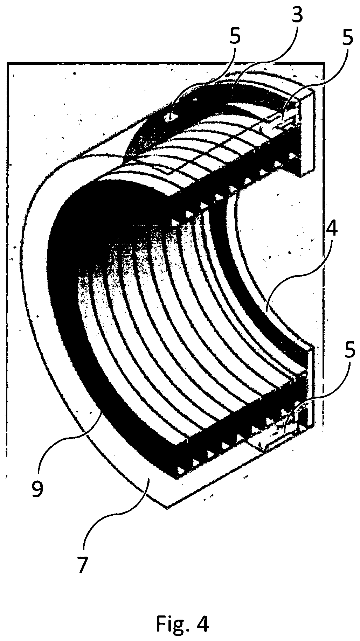

With reference to Fig. 4, there is shown a sectional plane of Fig. 3. As can be easily observed, the device 1 is thermally connected in the proximity of the cold side of the coil 9, preferably both outside and inside the cylinder formed by the coil 9 itself.

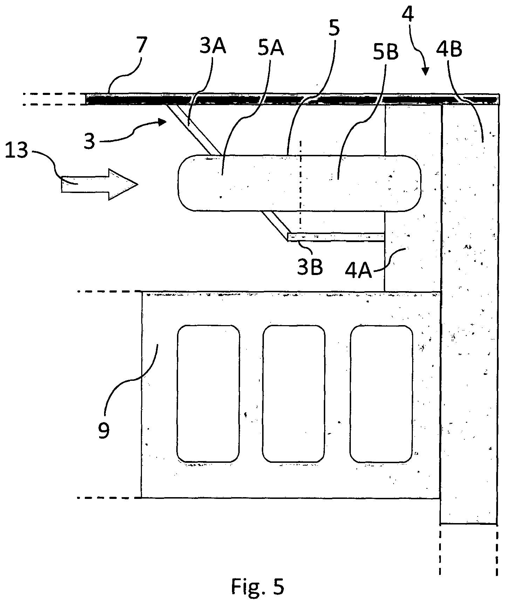

With particular reference to Fig. 5, according to the present invention the hot fumes, indicated by the second arrow 13, hit a first section 3A of the first plate 3 and the evaporator section 5A of the heat pipes 5. As clearly shown in Fig. 5, in a preferred embodiment of the invention the longitudinal axis of the conduit of the heat pipe 5 is substantially coherent with the direction of the fumes, represented by the second arrow 13.

The first section 3A is so arranged as to convey most of the hot fumes substantially towards the evaporator section 5A of the heat pipes 5; this enhances heat transfer from the fumes to the heat pipes 5. In particular, the first section 3A is substantially oblique relative to the longitudinal axis of the heat pipes 5. Furthermore, the inclination of the first section 3A is such as to promote the supply of hot fumes to the coldest walls of the coil 9, thus also optimizing the direct heat exchange between the fumes and the fluid in the coil 9.

The first plate 3 preferably comprises also a second section 3B, which is substantially parallel to the longitudinal axis of said heat pipes 5. The second section 3B connects the first section 3A mechanically and thermally to a first section 4A of the support plate 4. The first section 4A is mechanically and thermally connected to a second section 4B, or, in another embodiment, the first section 4A and the second section 4B may be made as one piece. It should also be pointed out that the first section 3A and the second section 3B may also be made as one piece of highly conductive material, e.g. aluminum, steel or other alloys.

Therefore, the heat of the fumes, collected by the heat pipes 5, is returned to a condenser section 5B, where the fluid within the heat pipes 5 gets back into the liquid phase and yields the latent heat of vaporization to the coil 9. Such heat transfer occurs on the first section 4A of the support plate 4, the latter being thermally and mechanically connected to the cold side of the coil 9. More in detail, the support plate 4 can be mounted to the base of the cold side of the coil 9.

The above-described heat transfer results in the temperature of the fumes decreasing more than in a boiler lacking the device 1, thus improving the efficiency of the heat exchange between the combustion fumes and the fluid in the coil 9. This translates into saved fuel, when a predetermined operating cycle of the boiler is to be obtained.

In other words, as a consequence of the application of the device 1 of a boiler according to the present invention to a heat exchanger 9, one obtains the following: lower temperature of the exhaust fumes; increased overall efficiency of the boiler; less fuel consumed by the burner; heat exchange moved towards the cold side of the heat exchanger 9; more efficient heat transfer between the fumes and the cold fluid; facilitated flow of hot fumes towards the condensation area, located near the heat exchanger 9.

Furthermore, the device 1 of a boiler according to the present invention can be easily installed on any heat exchanger 9 of an existing and/or future condensation boiler. In this latter case, it will be possible to reduce the area of the exchanger, thus saving material and time and making the entire boiler more compact, without renouncing to optimal heat exchange between the fumes and the fluid in the exchanger, which translates into high efficiency of the boiler as a whole.

In fact, the device 1 can be easily applied externally to the heat exchanger 9, e.g. a cylindrical coil, without essentially having to modify any existing element of the condensation boiler. With a cylindrical coil 9, the cold side thereof is mechanically and thermally connected to the support plate 4, which is equipped with at least one seat adapted to receive one side of the coil 9.

The method for optimizing heat transfer in a boiler according to the present invention provides for applying a device 1 to the heat exchanger 9, said device 1 being adapted to cooperate with the heat exchanger 9 associated with a burner, and comprising heat transfer means 3,4,5 adapted to transfer heat from fumes produced by a combustion generated by said burner to a cold side of the heat exchanger 9, said application being adapted to establish a thermal connection between the device 1 and the heat exchanger 9.

In particular, the thermal connection occurs in the proximity of the cold side of the heat exchanger 9.

The features of the present invention, as well as the advantages thereof, are apparent from the above description.

A first advantage of the boiler and method according to the present invention is that the heat exchange is moved towards the cold side of the heat exchanger.

A second advantage of the boiler and method according to the present invention is that the efficiency of the heat exchange between the fumes and the cold fluid is improved.

A third advantage of the boiler and method according to the present invention is that the flow of hot fumes towards the condensation area, located near the cold side of the heat exchanger, is promoted.

A further advantage of the boiler and method according to the present invention is that the overall efficiency of an existing and/or future condensation boiler is improved.

Yet another advantage of the boiler and method according to the present invention is that the temperature of the exhaust fumes and fuel consumption will decrease, resulting in less atmospheric pollution caused by combustion gases.

The boiler and method for optimizing heat transfer in a boiler may be subject to many possible variations without departing from the novelty spirit of the inventive idea; it is also clear that in the practical implementation of the invention the illustrated details may have different shapes or be replaced with other technically equivalent elements.

For example, if the heat exchanger 9 comprises a plurality of coils, according to a possible alternative the device 1 may be applied to a return collector of the heating system, where the fluid in the coils is colder, i.e. in proximity to the cold side thereof. In this case, the shape of the device 1 shall be coherent with that of the collector, e.g. rectangular, to which the coils are connected, it being understood that the device 1 allows to collect more combustion fumes through the first plate 3 and to improve the heat exchange with the heat exchanger 9 through the heat pipes 5 provided on the first plate 3. Thanks to the device 1 of a boiler according to the present invention, the number of loops in the coils of a condensation boiler can be reduced, so that the boiler can become more compact.

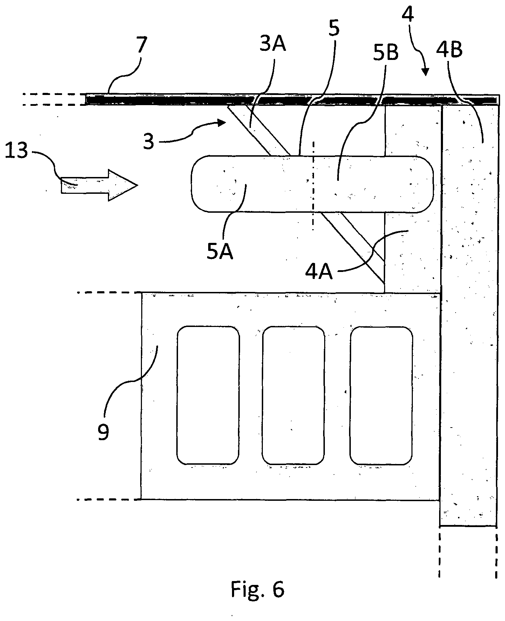

With reference to Fig. 6, in a further embodiment of the device 1 of a boiler according to the present invention, the first plate 3 comprises only the first section 3A, which is therefore mechanically, thermally and directly connected to the first section 4A of the support plate 4.

It can therefore be easily understood that the present invention is not limited to a boiler and a method for optimizing heat transfer in a boiler, but may be subject to many modifications, improvements or replacements of equivalent parts and elements without departing from the inventive idea, as clearly specified in the following claims.

## Claims

1. A boiler comprising a device (1) and a heat exchanger (9) associated with a burner, said device (1) being thermally connected to said heat exchanger (9), wherein said device (1) comprises heat transfer means (3,4,5) adapted to transfer heat from fumes produced by a combustion generated by said burner to a cold side of said heat exchanger (9), said boiler being **characterised in that**:
said heat transfer means (3,4,5) comprise a first plate (3), a support plate (4) and a plurality of heat pipes (5);
said first plate (3) is adapted to house said plurality of heat pipes (5) and comprises a first section (3A), which is adapted to substantially convey hot fumes to an evaporator section (5A) of said plurality of heat pipes (5) and is substantially oblique relative to a longitudinal axis of one of said plurality of heat pipes (5);
said support plate (4) is adapted to house said plurality of heat pipes (5), is thermally connected to said first plate (3) both directly and through the heat pipes (5), and is adapted to transfer heat towards said heat exchanger (9).

2. A boiler according to claim 1, wherein said first plate (3) has a shape which is coherent with that of said heat exchanger (9), such that it can suitably convey said fumes towards said cold side of said heat exchanger (9).

3. A boiler according to claim 1 or 2, wherein said first plate (3) is made of metal material having high thermal conductivity, in particular aluminum, steel or other alloys.

4. A boiler according to one or more of the claims 1 to 3, wherein said support plate (4) is made of metal material having high thermal conductivity, in particular aluminum, steel or other alloys.

5. A boiler according to one or more of the claims 1 to 4, wherein said heat pipes (5) of said plurality of heat pipes (5) are arranged equally spaced along a perimeter, or circumference, of said first plate (3).

6. A boiler according to one or more of the claims 1 to 5, wherein a longitudinal axis of each one of the pipes of said plurality of heat pipes (5) is substantially coherent with the direction of the fumes.

7. A boiler according to claim 1, wherein said first plate (3) comprises a second section (3B), which is substantially parallel to the longitudinal axis of said heat pipes (5), said second section (3B) connecting said first section (3A) mechanically and thermally to a first section (4A) of said support plate (4).

8. A boiler according to claim 7, wherein said first section (4A) of said support plate (4) is mechanically and thermally connected to said second section (4B) of said support plate (4).

9. A boiler according to claim 7, wherein said first section (4A) and said second section (4B) of said support plate are made as one piece.

10. A boiler according to any of claims 7-9, wherein said heat from fumes collected by said heat pipes (5) is returned to a condenser section (5B), where the fluid within said heat pipes (5) gets back into the liquid phase and yields the latent heat of vaporization to said heat exchanger (9), such heat transfer occurring on said first section (4A) of said support plate (4), the latter being thermally and mechanically connected to the cold side of said heat exchanger (9).

11. A boiler according to claim 10, wherein said support plate (4) is mounted to a base of the cold side of the heat exchanger (9).

12. A boiler according to claim 1, wherein said heat exchanger (9) comprises a cylindrical coil, the cold side thereof is mechanically and thermally connected to said support plate (4), which is equipped with at least one seat adapted to receive one side of said cylindrical coil (9).

13. A method for optimizing heat transfer in a boiler, said method comprising the steps of:
- applying a device (1) to a heat exchanger (9) associated with a burner;
- thermally connecting said device (1) to said heat exchanger (9);
- transfer heat from fumes produced by a combustion generated by said burner to a cold side of said heat exchanger (9) by means of heat transfer means (3,4,5), said method being **characterised in that**:
said heat transfer means (3,4,5) comprise a first plate (3), a support plate (4) and a plurality of heat pipes (5);
said first plate (3) is adapted to house said plurality of heat pipes (5) and comprises a first section (3A), which is adapted to substantially convey hot fumes to an evaporator section (5A) of said plurality of heat pipes (5) and is substantially oblique relative to a longitudinal axis of one of said plurality of heat pipes (5);
said support plate (4) is adapted to house said plurality of heat pipes (5), is thermally connected to said first plate (3) both directly and through the heat pipes (5), and is adapted to transfer heat towards said heat exchanger (9).

## Patentansprüche

1. Boiler, umfassend eine Vorrichtung (1) und einen Wärmetauscher (9), der mit einem Brenner assoziiert ist, wobei die Vorrichtung (1) Wärmeübertragungsmittel (3, 4, 5) umfasst, die angepasst sind, Wärme aus dem Rauch, der durch eine Verbrennung, die mit dem Brenner erzeugt wird, an eine kalte Seite des Wärmetauschers (9) zu übertragen, wobei der Boiler **dadurch gekennzeichnet ist, dass**:
die Wärmeübertragungsmittel (3, 4, 5) eine erste Platte (3), eine Halteplatte (4) und mehrere Heizröhren (5) umfassen;
die erste Platte (3) angepasst ist, die mehreren Heizröhren (5) aufzunehmen, und einen ersten Abschnitt (3A) umfasst, der angepasst ist, um im Wesentlichen heißen Rauch an einen Verdampferabschnitt (5A) der mehreren Heizröhren (5) zu transportieren und im Wesentlichen schräg relativ zu einer Längsachse von einer der mehreren Heizröhren (5) ist;
wobei die Halteplatte (4) angepasst ist, die mehreren Heizröhren (5) aufzunehmen, thermisch mit der ersten Platte (3) direkt und durch die Heizröhren (5) verbunden ist und angepasst ist, Wärme in Richtung auf den Wärmetauscher (9) zu übertragen.

2. Boiler nach Anspruch 1, wobei die erste Platte (3) eine Form aufweist, die kohärent zu der von dem Wärmetauscher (9) ist, sodass sie passend den Rauch in Richtung auf die kalte Seite des Wärmetauschers (9) transportieren kann.

3. Boiler nach Anspruch 1 oder 2, wobei die erste Platte (3) aus Metallmaterial mit einer hohen Wärmeleitfähigkeit, beispielsweise Aluminium, Stahl oder anderen Legierungen, hergestellt ist.

4. Boiler nach einem oder mehreren der Ansprüche 1 bis 3, wobei die Halteplatte (4) aus Metallmaterial mit einer hohen Wärmeleitfähigkeit, beispielsweise Aluminium, Stahl oder anderen Legierungen, hergestellt ist.

5. Boiler nach einem der mehreren der Ansprüche 1 bis 4, wobei die Heizröhren (5) der mehreren Heizröhren (5) gleichmäßig entlang eines Umfangs oder Umkreises der ersten Platte (3) angeordnet sind.

6. Boiler nach einem oder mehreren der Ansprüche 1 bis 5, wobei eine Längsachse jeder der Röhren der mehreren Heizröhren (5) im Wesentlichen kohärent mit der Richtung des Rauchs ist.

7. Boiler nach Anspruch 1, wobei die erste Platte (3) einen zweiten Abschnitt (3B) aufweist, der im Wesentlichen parallel zur Längsachse der Heizröhren (5) ist, wobei der zweite Abschnitt (3B) den ersten Abschnitt (3A) mechanisch und thermisch mit einem ersten Abschnitt (4A) der Halteplatte (4) verbindet.

8. Boiler nach Anspruch 7, wobei der erste Abschnitt (4A) der Halteplatte (4) mechanisch und thermisch mit dem zweiten Abschnitt (4B) der Halteplatte (4) verbunden ist.

9. Boiler nach Anspruch 7, wobei der erste Abschnitt (4A) und der zweite Abschnitt (4B) der Halteplatte einteilig hergestellt sind.

10. Boiler nach einem der Ansprüche 7 bis 9, wobei die Wärme des Rauchs, die durch die Heizröhren (5) aufgenommen wird, zu einem Kondensatorabschnitt (5B) zurückgegeben wird, wo das Fluid in den Heizröhren (5) zurück in die flüssige Phase tritt und die latente Wärme der Verdampfung zu dem Wärmetauscher (9) bringt, sodass Wärmeübertragung auf dem ersten Abschnitt (4A) der Halteplatte (4) erfolgt, wobei die Letztgenannte thermisch und mechanisch mit der kalten Seite des Wärmetauschers (9) verbunden ist.

11. Boiler nach Anspruch 10, wobei die Halteplatte (4) auf einer Basis der kalten Seite des Wärmetauschers (9) angebracht ist.

12. Boiler nach Anspruch 1, wobei der Wärmetauscher (9) eine zylindrische Spule aufweist, die kalte Seite davon mechanisch und thermisch mit der Halteplatte (4) verbunden ist, die mit mindestens einem Sitz ausgestattet ist, der angepasst ist, eine Seite der zylindrischen Spule (9) aufzunehmen.

13. Verfahren zum Optimieren von Wärmeübertragung in einem Boiler, wobei das Verfahren die Schritte umfasst:
- Anlegen einer Vorrichtung (1) an einen Wärmetauscher (9), der mit einem Brenner assoziiert ist;
- thermisches Verbinden der Vorrichtung (1) mit dem Wärmetauscher (9);
- Übertragen von Wärme aus Rauch, der durch die Verbrennung, die durch den Brenner erzeugt wurde, an eine kalte Seite des Wärmetauschers (9) mittels Wärmeübertragungsmitteln (3, 4, 5), wobei das Verfahren **dadurch gekennzeichnet ist, dass**:
die Wärmeübertragungsmittel (3, 4, 5) eine erste Platte (3), eine Halteplatte (4) und mehrere Heizröhren (5) umfassen;
die erste Platte (3) angepasst ist, die mehreren Heizröhren (5) aufzunehmen, und einen ersten Abschnitt (3A) aufweist, der angepasst ist, heißen Rauch an einen Verdampferabschnitt (5A) der mehreren Heizröhren (5) zu transportieren und im Wesentlichen schräg relativ zu einer Längsachse der einen oder mehreren Heizröhren (5) ist;
die Halteplatte (4) angepasst ist, die mehreren Heizröhren (5) aufzunehmen, thermisch mit der ersten Platte (3) direkt und durch die Heizröhren (5) verbunden ist und angepasst ist, Wärme in Richtung auf den Wärmetauscher (9) zu übertragen.

## Revendications

1. Chaudière comprenant un dispositif (1) et un échangeur de chaleur (9) associé à un brûleur, ledit dispositif (1) étant relié thermiquement audit échangeur de chaleur (9), ledit dispositif (1) comprenant des moyens de transfert de chaleur (3, 4, 5) adaptés pour transférer de la chaleur provenant de fumées produites par une combustion générée par ledit brûleur, vers un côté froid dudit échangeur de chaleur (9), ladite chaudière étant **caractérisée par le fait que** :
lesdits moyens de transfert de chaleur (3, 4, 5) comprennent une première plaque (3), une plaque de support (4) et une pluralité de caloducs (5) ;
ladite première plaque (3) est adaptée pour recevoir ladite pluralité de caloducs (5) et comprend une première section (3A), qui est adaptée pour transporter sensiblement des fumées chaudes jusqu'à une section évaporateur (5A) de ladite pluralité de caloducs (5) et est sensiblement oblique par rapport à un axe longitudinal de l'un parmi ladite pluralité de caloducs (5) ;
ladite plaque de support (4) est adaptée pour recevoir ladite pluralité de caloducs (5), est reliée thermiquement à ladite première plaque (3) à la fois directement et par l'intermédiaire des caloducs (5), et est adaptée pour transférer de la chaleur vers ledit échangeur de chaleur (9).

2. Chaudière selon la revendication 1, dans laquelle ladite première plaque (3) a une forme qui est cohérente avec celle dudit échangeur de chaleur (9), de telle sorte qu'elle peut transporter de manière appropriée lesdites fumées vers ledit côté froid dudit échangeur de chaleur (9).

3. Chaudière selon la revendication 1 ou 2, dans laquelle ladite première plaque (3) est faite de matériau métallique ayant une conductivité thermique élevée, en particulier de l'aluminium, de l'acier ou d'autres alliages.

4. Chaudière selon une ou plusieurs des revendications 1 à 3, dans laquelle ladite plaque de support (4) est faite de matériau métallique ayant une conductivité thermique élevée, en particulier de l'aluminium, de l'acier ou d'autres alliages.

5. Chaudière selon une ou plusieurs des revendications 1 à 4, dans laquelle lesdits caloducs (5) de ladite pluralité de caloducs (5) sont disposés à équidistance le long d'un périmètre, ou d'une circonférence, de ladite première plaque (3).

6. Chaudière selon une ou plusieurs des revendications 1 à 5, dans laquelle un axe longitudinal de chacun des caloducs de ladite pluralité de caloducs (5) est sensiblement cohérent avec la direction des fumées.

7. Chaudière selon la revendication 1, dans laquelle ladite première plaque (3) comprend une seconde section (3B), qui est sensiblement parallèle à l'axe longitudinal desdits caloducs (5), ladite seconde section (3B) reliant ladite première section (3A) mécaniquement et thermiquement à une première section (4A) de ladite plaque de support (4).

8. Chaudière selon la revendication 7, dans laquelle ladite première section (4A) de ladite plaque de support (4) est reliée mécaniquement et thermiquement à ladite seconde section (4B) de ladite plaque de support (4) .

9. Chaudière selon la revendication 7, dans laquelle ladite première section (4A) et ladite seconde section (4B) de ladite plaque de support sont faites d'une seule pièce.

10. Chaudière selon l'une quelconque des revendications 7 à 9, dans laquelle ladite chaleur provenant de fumées collectée par lesdits caloducs (5) est renvoyée à une section condenseur (5B), le fluide à l'intérieur desdits caloducs (5) retournant en phase liquide et fournissant la chaleur latente de vaporisation audit échangeur de chaleur (9), un tel transfert de chaleur se produisant sur ladite première section (4A) de ladite plaque de support (4), cette dernière étant reliée thermiquement et mécaniquement au côté froid dudit échangeur de chaleur (9).

11. Chaudière selon la revendication 10, dans laquelle ladite plaque de support (4) est montée sur une base du côté froid de l'échangeur de chaleur (9).

12. Chaudière selon la revendication 1, dans laquelle ledit échangeur de chaleur (9) comprend une bobine cylindrique, son côté froid est relié mécaniquement et thermiquement à ladite plaque de support (4), qui est équipé d'au moins un siège adapté pour recevoir un côté de ladite bobine cylindrique (9).

13. Procédé pour optimiser un transfert de chaleur dans une chaudière, ledit procédé comprenant les étapes :
- appliquer un dispositif (1) à un échangeur de chaleur (9) associé à un brûleur ;
- relier thermiquement ledit dispositif (1) audit échangeur de chaleur (9) ;
- transférer de la chaleur provenant de fumées produites par une combustion générée par ledit brûleur, vers un côté froid dudit échangeur de chaleur (9) à l'aide de moyens de transfert de chaleur (3, 4, 5), ledit procédé étant **caractérisé par le fait que** :
lesdits moyens de transfert de chaleur (3, 4, 5) comprennent une première plaque (3), une plaque de support (4) et une pluralité de caloducs (5) ;
ladite première plaque (3) est adaptée pour recevoir ladite pluralité de caloducs (5) et comprend une première section (3A), qui est adaptée pour transporter sensiblement des fumées chaudes jusqu'à une section évaporateur (5A) de ladite pluralité de caloducs (5) et est sensiblement oblique par rapport à un axe longitudinal de l'un parmi ladite pluralité de caloducs (5) ;
ladite plaque de support (4) est adaptée pour recevoir ladite pluralité de caloducs (5), est reliée thermiquement à ladite première plaque (3) à la fois directement et par l'intermédiaire des caloducs (5), et est adaptée pour transférer de la chaleur vers ledit échangeur de chaleur (9).
